# EUROPÄISCHE PATENTSCHRIFT

(11) **EP 1 066 171 B1**
(45) Veröffentlichungstag und Bekanntmachung des Hinweises auf die Patenterteilung: **12.12.2001**
(21) Anmeldenummer: 99937909.2
(22) Anmeldetag: 27.02.1999
(51) Int. Cl.: B60N 2/46

(54) **ANORDNUNG EINER VERSENKBAREN ARMLEHNE IN EINEM FAHRZEUG**
ARRANGEMENT OF AN ARM REST WHICH FOLDS UP AND DOWN IN A VEHICLE
CONFIGURATION D'UN ACCOUDOIR ENCASTRABLE D'UN VEHICULE

(30) Priorität: 05.03.1998 DE 19809426
(43) Veröffentlichungstag der Anmeldung: 10.01.2001
(73) Patentinhaber: Volkswagen Aktiengesellschaft, 38436 Wolfsburg (DE)
(72) Erfinder: ANDRONIS, Odysseus, D-38102 Braunschweig (DE)
(74) Vertreter: Schippan, Ralph, Dr.-Ing.
(86) Internationale Anmeldenummer: EP9901298
(87) Internationale Veröffentlichungsnummer: WO9944858

(56) Entgegenhaltungen:
- DE-A- 4 141 807
- FR-A- 807 538
- GB-A- 678 232
- US-A- 2 708 135
- US-A- 4 906 044

## Beschreibung

Die Erfindung betrifft eine Anordnung einer versenkbaren Armlehne in einem Fahrzeug nach dem Oberbegriff des Anspruchs 1.

Versenkbare Armlehnen in Fahrzeugen gemäß dem Oberbegriff des Anspruchs 1 sind allgemein in der Mitte einer Rückenlehne einer Fondsitzbank bekannt. Dabei kann die Armlehne als Polsterteil in einen Aufnahmeraum der Rückenlehne eingeklappt und versenkt werden.

Weiter ist eine klappbare Armstütze an einem vertikalen Wandbereich einer Fensterbrüstung eines Fahrzeugs bekannt (DE 41 41 807 A1), die aus einer etwa vertikalen Aufbewahrungsstellung in eine etwa horizontale Gebrauchslage schwenkbar ist. Die Armstütze bildet in der Aufbewahrungsstellung einen Wandteil einer Wandverkleidung der Fensterbrüstung. Beim Verschwenken der Armstütze in die Gebrauchslage verlagert sich das in Aufbewahrungsstellung obere Ende der Armstütze von dem Wandbereich weg. Damit wird eine klappbare Armabstützung im seitlichen Fahrzeugwandbereich geschaffen, wobei jedoch die Klappanordnung im Bereich der Fensterbrüstung aufwendig ist und Sicherheitseinrichtungen für einen Seitenaufprall beeinträchtigen kann.

Zudem ist eine klappbare, winkelförmige Armlehne bekannt, die an einer Seite eines Kraftfahrzeugsitzes schwenkbar gehalten ist (DE 34 21 687 C2). Die Armlehne ist von einer unteren abgeklappten Position in eine Gebrauchsstellung nach oben klappbar und dort arretierbar. Eine solche winkelförmige Armlehne benötigt viel Platz, ist daher für Personenkraftfahrzeuge nicht geeignet und wird nur bei Bussitzen zur Erleichterung der Sitzeinnahme aus einem Busmittelgang verwendet.

Bei einer bekannten Sicherheitseinrichtung für ein Fahrzeug (DE 195 15 851 A1) wird zum Schutz eines Fondinsassen bei einem Seitenaufprall eine Airbaganordnung verwendet. Um neben dem Kopf- und Schulterbereich auch den Hüft- und Brustbereich des Insassen wirksam schützen zu können wird die Rückenlehne in ein Seitenteil und ein Mittelteil aufgeteilt. Das Seitenteil ist am Aufbau des Fahrzeugs befestigt und beinhaltet das durch einen Gasgenerator aufblasbare Gaskissen der Airbageinrichtung. Eine Armlehnenfunktion liegt hier nicht vor.

Aufgabe der Erfindung ist es, eine einfache, raumsparende und funktionelle Armlehnenanordnung im Fondbereich eines Fahrzeugs vorzuschlagen.

Diese Aufgabe wird mit den Merkmalen des Anspruchs 1 gelöst.

Gemäß Anspruch 1 enthält ein Fahrzeug fondseitige Radhäuser, von denen wenigstens ein Radhaus eine in den Fondsitzbereich weisende und von dort zugängliche Radhauswand mit einer unmittelbar oder mittelbar zugeordneten Radhausverkleidung umfaßt Die Armlehne ist in einem Aufnahmeraum dieser Radhausverkleidung versenkbar und aufklappbar angeordnet.

Eine solche klappbare und versenkbare Armlehne kann vorzugsweise beidseitig im Seitenbereich einer Fondsitzbank angeordnet sein. Diese Armlehne kann anstelle oder zusätzlich zu an sich bekannten Seitenverkleidungsarmlehnen angebracht sein. Vorteilhaft wird bei ausgeklappter Armlehne eine gute Seitenführung erreicht, insbesondere für Kinder oder wenn die Fondsitzbank nicht voll mit drei Personen besetzt ist. Die Armlehne läßt sich zudem ohne besonderen Platzbedarf einfach und kostengünstig in die Radhausverkleidung integrieren. Zudem ergibt sich eine optisch ansprechende Gestaltung, wobei die Oberflächenkontur der versenkten Armlehne sowohl dem Verlauf des Radhauses als auch einer ergonomischen Gestalt der Rückenlehne angepaßt werden kann.

Für eine gut geeignete Armabstützung wird vorgeschlagen, die versenkte Armlehne aus einem etwa vertikalen, länglichen Aufnahmeraum um eine in Fahrzeugquerrichtung gerichtete Klappachse in ihre Gebrauchsstellung in Fahrzeuglängsrichtung aufklappbar zu gestalten. Dabei kann die Klappachse je nach den Gegebenheiten in einem unteren oder oberen Bereich der Armlehne angeordnet sein. Entsprechend ist die Armlehne dann entweder aus der versenkten Lage nach unten oder nach oben aufklappbar. Insbesondere bei einer Aufklappung nach oben ist eine an sich bekannte, arretierbare Gebrauchsstellung mit der Möglichkeit einer Belastung vorzusehen. Für eine Entriegelung kann ebenfalls auf an sich bekannte und bewährte Vorrichtungen zurückgegriffen werden, wobei eine Entriegelung beispielsweise durch ein Anheben der Armlehne entgegen der Belastungsrichtung und/oder einen Tipphebel und/oder eine Betätigungstaste erfolgen kann.

Der Armlehnenkörper kann vorteilhaft zu einem Aufnahmebehälter ausgebildet werden, wobei wenigstens ein durch einen verschließbaren Deckel abdeckbares Aufnahmefach für Utensilien im Armlehnenkörper enthalten ist.

Die Radhausverkleidung kann in üblicher Weise unmittelbar an der Radhauswand als Überzug und hier auch ggf. als Polsterteil angebracht und gehalten sein. Der Aufnahmeraum für die Armlehne kann dann auf einfache Weise durch eine Einbuchtung der Radhauswand und/oder eine Aussparung im Polsterteil zur Verfügung gestellt werden.

Alternativ dazu kann die Radhausverkleidung mit dem Aufnahmeraum und der Armlehne mittelbar als karosserieverbundenes Seitenteil einer Rückenlehne ausgebildet sein. Die Rückenlehne ist dabei in dieses relativ kleine Seitenteil und wenigstens ein Mittelteil geteilt, wobei das Seitenteil die in den Fondsitzbereich weisende Radhauswand als Verkleidung abdeckt. Im versenkten Zustand der Armlehne verläuft dann das Seitenteil in einer ergonomischen Kontur mit dem Mittelteil der Rückenlehne.

In vorteilhafter Weise läßt sich die erfindungsgemäße Armlehnenanordnung mit einer an sich bekannten geteilten Rückenlehne kombinieren, wobei diese in eine 1/3-Lehne und eine 2/3-Lehne geteilt ist. Dabei kann vorzugsweise die 1/3-Lehne fest angeordnet und die 2/3-Lehne umklappbar ausgeführt sein. Die 1/3-Lehne kann dabei ggf. Träger einer weiteren Armlehne sein, so daß auch bei umgeklappter 2/3-Lehne eine gute Seitenführung an beiden Seiten der 1/3-Lehne gewährleistet ist.

In einer kostengünstigen Konstruktion kann die Klappachse der Armlehne an wenigstens einem rohbauseitigen Bock des Radhauses gelagert sein. Zudem besteht die Möglichkeit, ein vormontierbares Montagemodul aus einem Radhaus, einem angeschlossenen Federbein und einer Radhausverkleidung mit Armlehne zu schaffen, wodurch weitere Kostenreduzierungen bei der Herstellung und Montage möglich sind.

Anhand einer Zeichnung wird die Erfindung näher erläutert.

Es zeigen:
- Fig. 1: eine schematische Darstellung einer nach oben klappbaren Armlehne in einem Fahrzeug,
- Fig. 2: eine Schnittdarstellung entlang der Linie A-A der Fig. 1,
- Fig. 3: eine schematische Darstellung einer nach unten klappbaren Armlehne in einem Fahrzeug, und
- Fig. 4: eine Schnittdarstellung entlang der Linie B-B der Fig. 3.

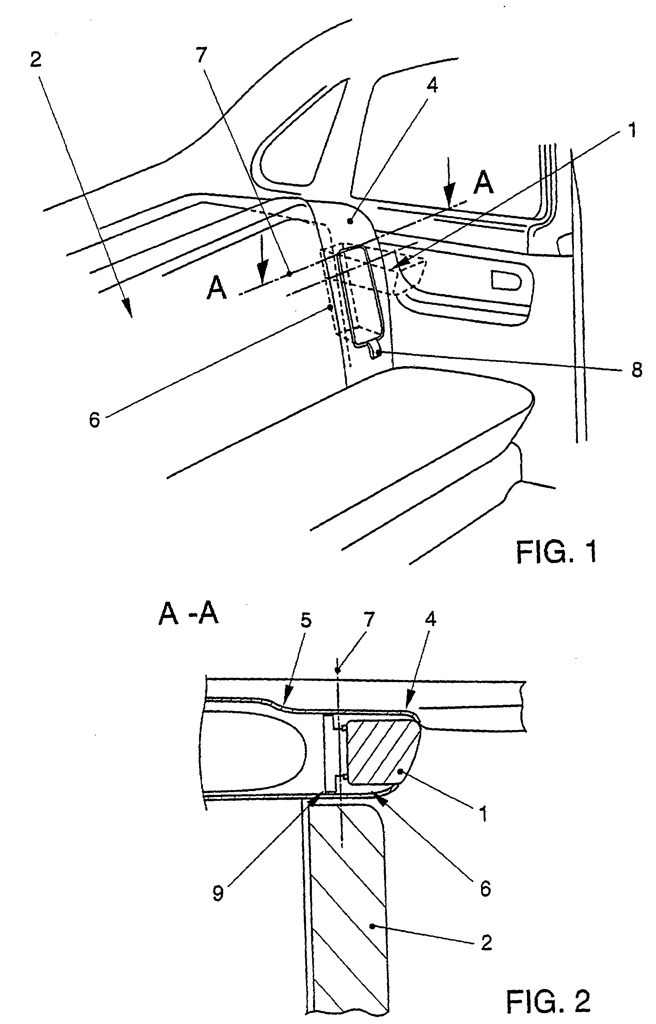

In der Fig. 1 ist ein Fondsitzbereich eines Fahrzeugs mit einer Rückenlehne 2 dargestellt. Seitlich an diese Rückenlehne 2 schließt sich eine Radhauswandverkleidung 4 an, die als karosserieverbundenes Seitenteil eine Radhauswand 5 abdeckt.

Die Radhauswandverkleidung 4 umfaßt einen als Einbuchtung in der Radhauswand 5 ausgebildeten Aufnahmeraum 6, in dem eine Armlehne 1 im in der Fig. 1 dargestellten, versenkten Zustand formschlüssig aufgenommen ist.

Aus dieser versenkten Stellung ist die Armlehne 1 um eine in Fahrzeugquerrichtung gerichtete Klappachse 7 in ihre in der Fig. 1 strichliert eingezeichnete Gebrauchsstellung in Fahrzeuglängsrichtung aufklappbar. Zur einfacheren Bedienung ist hierzu an der Armlehne 1 eine Zugschlaufe 8 angeordnet.

In der aufgeklappten Position ist die Armlehne 1 für eine Belastung durch einen Benutzer arretiert. Eine Entriegelung erfolgt beispielsweise durch ein Anheben der Armlehne 1 entgegen der Belastungsrichtung, wobei die Armlehne 1 nach dieser Entriegelung wieder in dem Aufnahmeraum 6 der Radhauswandverkleidung 4 versenkbar ist.

Wie dies insbesondere der Fig. 2 entnommen werden kann, ist die Klappachse 7 an einem rohbauseitigen Bock 9 der Radhauswand 5 gelagert. Bei dem in den Fig. 1 und 2 dargestellten Ausführungsbeispiel bilden das Radhaus, ein hier nicht dargestelltes Federbein und die Radhauswandverkleidung 4 ein vormontiertes Montagemodul.

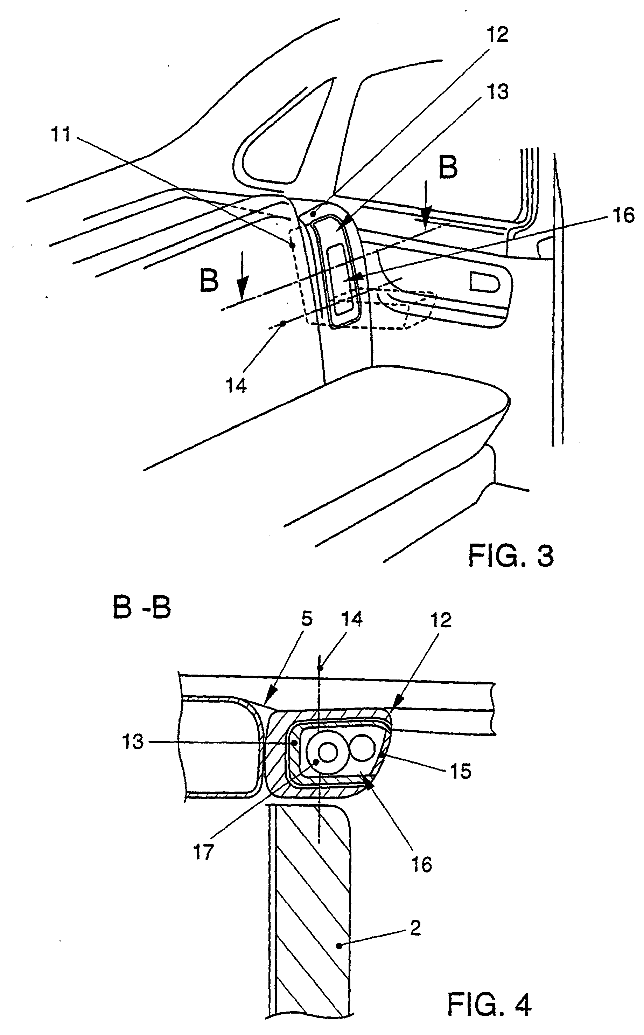

In der Fig. 3 ist ein Fondsitzbereich eines Fahrzeugs mit einer alternativen Anordnung einer versenkbaren Armlehne 13 dargestellt, wobei gleiche Teile mit gleichen Bezugszeichen bezeichnet werden.
Seitlich an die Rückenlehne 2 schließt sich hier ein Polsterteil 12 an, das die Radhauswand 5 abdeckt. In dem Polsterteil 12 ist eine Aussparung 11 ausgebildet, in der die Armlehne 13 im in der Fig. 3 dargestellten versenkten Zustand formschlüssig aufgenommen ist. Aus dieser versenkten Stellung ist die Armlehne 13 um eine in Fahrzeugquerrichtung gerichtete Klappachse 14 in ihre in der Fig. 3 strichliert eingezeichnete Gebrauchsstellung in Fahrzeuglängsrichtung aufklappbar.

Wie dies insbesondere aus der Fig. 4 ersichtlich ist, die einen Schnitt entlang der Linie B-B der Fig. 3 darstellt, ist in der Armlehne 13 zusätzlich ein Aufnahmefach 16 für Utensilien, wie z.B. Flaschen, ausgebildet, das mittels eines Deckels 15 verschließbar ist.

## Patentansprüche

1. Anordnung einer versenkbaren Armlehne in einem Fahrzeug, welches fondseitige Radhäuser aufweist, **dadurch gekennzeichnet, daß** wenigstens ein Radhaus eine in den Fondsitzbereich weisende und von dort zugängliche Radhauswand (5) mit einer unmittelbar oder mittelbar zugeordneten Radhausverkleidung (4; 12) umfaßt, und daß die Armlehne (1; 13) in einem Aufnahmeraum (6; 11) dieser Radhausverkleidung (4; 12) versenkbar und aufklappbar angeordnet ist.

2. Anordnung einer versenkbaren Armlehne nach Anspruch 1, **dadurch gekennzeichnet, daß** die Radhausverkleidung unmittelbar an der Radhauswand (5) als Überzug und/oder Polsterteil (12) angebracht ist und der Aufnahmeraum für die Armlehne (1; 13) durch eine Einbuchtung der Radhauswand (5) und/oder einer Aussparung (11) im Polsterteil (12) gebildet ist.

3. Anordnung einer versenkbaren Armlehne nach Anspruch 1, **dadurch gekennzeichnet, daß** die Radhausverkleidung (4) mit dem Aufnahmeraum (6) und der Armlehne (1; 13) mittelbar als karosserieverbundenes Seitenteil einer Rückenlehne (2) ausgebildet ist, wobei die Rückenlehne (2) in das Seitenteil und wenigstens ein Mittelteil geteilt ist und das Seitenteil die in den Fondsitzbereich weisende Radhauswand (5) als Verkleidung abdeckt.

4. Anordnung einer versenkbaren Armlehne nach einem der Ansprüche 1 bis 3, **dadurch gekennzeichnet, daß** die versenkte Armlehne (1; 13) aus einem etwa vertikalen Aufnahmeraum (6; 11) um eine in Fahrzeugquerrichtung gerichtete Klappachse (7; 14) in ihre Gebrauchsstellung in Fahrzeuglängsrichtung aufklappbar ist.

5. Anordnung einer versenkbaren Armlehne nach Anspruch 4; **dadurch gekennzeichnet, daß** die Klappachse (7; 14) in einem unteren oder oberen Bereich der Armlehne (1; 13) angeordnet ist und entsprechend die Armlehne (1; 13) aus der versenkten Lage nach unten oder nach oben in eine arretierbare Gebrauchsstellung aufklappbar ist.

6. Anordnung einer versenkbaren Armlehne nach Anspruch 5, **dadurch gekennzeichnet, daß** eine nach oben in eine selbsttätig arretierbare Gebrauchsstellung aufklappbare Armlehne (1) von einem Benutzer in dieser Stellung belastbar ist und eine Entriegelung durch eine mechanische Anordnung beim Anheben der Armlehne entgegen der Belastungsrichtung und/oder einem Tipphebel und/oder einer Betätigungstaste erfolgt.

7. Anordnung einer versenkbaren Armlehne nach einem der Ansprüche 1 bis 6, **dadurch gekennzeichnet, daß** die Klappachse (7; 14) an wenigstens einem rohbauseitigen Bock (9) des Radhauses gelagert ist.

8. Anordnung einer versenkbaren Armlehne nach einem der Ansprüche 1 bis 7, **dadurch gekennzeichnet, daß** ein Radhaus und ein angeschlossenes Federbein sowie eine Radhausverkleidung (4) mit Armlehne (1) ein vormontiertes Montagemodul bilden.

9. Anordnung einer versenkbaren Armlehne nach einem der Ansprüche 1 bis 8, **dadurch gekennzeichnet, daß** die Oberflächenkontur der Radhausverkleidung (4; 12) mit der versenkten Armlehne (1; 13) an den Verlauf des Radhauses angepaßt sind.

10. Anordnung einer versenkbaren Armlehne nach einem der Ansprüche 1 bis 9, **dadurch gekennzeichnet, daß** im Armlehnenkörper (13) wenigstens ein durch einen verschließbaren Deckel (15) abdeckbares Aufnahmefach (16) für Utensilien (17) enthaften ist.

11. Anordnung einer versenkbaren Armlehne nach einem der Ansprüche 1 bis 10, **dadurch gekennzeichnet, daß** die Rückenlehne (2) in eine 1/3-Lehne und eine 2/3-Lehne geteilt ist, wobei die 1/3-Lehne fest angeordnet und die 2/3-Lehne umklappbar ist und die 1/3-Lehne gegebenenfalls Träger einer Armlehne ist.

## Claims

1. An arrangement of a fold-away armrest in a vehicle which comprises rear wheel housings, **characterised in that** at least one wheel housing comprises a wall (5) of the wheel housing facing the rear seat area and being accessible from said rear seat area, with a directly or indirectly associated wheel housing panel (4; 12) and **in that** the armrest (1; 13) is arranged in an accommodation space (6; 11) of this wheel housing panel (4; 12) so as to be able to be folded away and folded out.

2. The arrangement of a fold-away armrest according to claim 1, **characterised in that** the wheel housing panel is arranged directly on the wall (5) of the wheel housing as a cover and/or an upholstery part (12) and that the accommodation space for the armrest (1; 13) is formed by a concavity in the wall (5) of the wheel housing and/or a recess (11) in the upholstery part (12).

3. The arrangement of a fold-away armrest according to claim 1, **characterised in that** the wheel housing panel (4) with the accommodation space (6) and the armrest (1; 13) is designed directly as a lateral part of a backrest (2) which lateral part is connected to the body; with said backrest (2) being divided into a lateral part and at least one central part and with the lateral part covering the wall (5) of the wheel housing, which wall faces the rear seat area.

4. The arrangement of a fold-away armrest according to one of claims 1 to 3, **characterised in that** the folded away armrest (1; 13) can be folded out from an approximately vertical accommodation space (6; 11) around a folding axis (7; 14) aligned across the vehicle, into its in-use position in longitudinal direction of the vehicle.

5. The arrangement of a fold-away armrest according to claim 4, **characterised in that** the folding axis (7; 14) is arranged in a lower or upper region of the armrest (1; 13) and correspondingly, the armrest (1; 13) can be folded out from the fold-away position downward or upward into a lockable in-use position.

6. The arrangement of a fold-away armrest according to claim 5, **characterised in that** an armrest (1) which can be folded out, upwards into an automatically lockable in-use position, can be loaded in this position by a user, and **in that** unlocking takes place by a mechanical arrangement when lifting the armrest against the direction of loading and/or by a touch control lever and/or an activation button.

7. The arrangement of a fold-away armrest according to one of claims 1 to 6, **characterised in that** the folding axis (7; 14) rests against at least one lug (9) of the wheel housing on the body-in-white.

8. The arrangement of a fold-away armrest according to one of claims 1 to 7, **characterised in that** a wheel housing and an associated suspension strut as well as a wheel housing panel (4) with armrest (1) constitute a pre-assembled assembly module.

9. The arrangement of a fold-away armrest according to one of claims 1 to 8, **characterised in that** the surface contour of the wheel housing panel (4; 12) with the folded away armrest (1; 13) are matched to the contours of the wheel housing.

10. The arrangement of a fold-away armrest according to one of claims 1 to 9, **characterised in that** the body (13) of the armrest comprises at least one compartment (16) for implements (17), said compartment (16) being able to be covered by a lockable cover (15).

11. The arrangement of a fold-away armrest according to one of claims 1 to 10, **characterised in that** the backrest (2) is divided into a 1/3 backrest and a 2/3 backrest, with the 1/3 backrest being fixed and the 2/3 backrest being able to be folded down, and with the 1/3 backrest if need be carrying an armrest.

## Revendications

1. Configuration d'un accoudoir encastrable dans un véhicule, qui présente des logements de roues latéraux arrière, **caractérisée en ce qu'**au moins un logement de roue comprend une paroi (5) de logement de roue tournée vers la zone de siège arrière et accessible par là avec un habillage (4; 12) de logement de roue qui lui est affecté directement ou indirectement, et **en ce que** l'accoudoir (1; 13) est disposé de manière à pouvoir être encastré et rabattu dans un espace récepteur (6; 11) de cet habillage (4; 12) de logement de roue.

2. Configuration d'un accoudoir encastrable selon la revendication 1, **caractérisée en ce que** l'habillage du logement de roue est appliqué directement sur la paroi (5) du logement de roue sous la forme d'un revêtement et/ou d'une partie capitonnée (12) et l'espace récepteur pour l'accoudoir (1; 13) est formé par un renfoncement de la paroi (5) du logement de roue et/ou par une cavité (11) dans la partie capitonnée (12).

3. Configuration d'un accoudoir encastrable selon la revendication 1, **caractérisée en ce que** l'habillage (4) du logement de roue avec l'espace récepteur (6) et l'accoudoir (1; 13) est conformé directement en partie latérale - reliée à la carrosserie - d'un dossier arrière (2), le dossier arrière (2) étant divisé en la partie latérale (2) et au moins en une partie centrale et la partie latérale recouvrant la paroi (5) du logement de roue tournée vers la zone du siège arrière sous la forme d'un habillage.

4. Configuration d'un accoudoir encastrable selon l'une quelconque des revendications 1 à 3, **caractérisée en ce que** l'accoudoir encastré (1; 13) peut être rabattu d'un espace récepteur approximativement vertical (6; 11) dans sa position d'utilisation dans la direction longitudinale du véhicule autour d'un axe de rabattement (7; 14) dirigé dans la direction transversale du véhicule.

5. Configuration d'un accoudoir encastrable selon la revendication 4, **caractérisée en ce que** l'axe de rabattement (7; 14) est situé dans une zone inférieure ou supérieure de l'accoudoir (1; 13) et l'accoudoir (1; 13) peut être rabattu de manière correspondante de la position encastrée vers le bas ou vers le haut en position d'utilisation blocable.

6. Configuration d'un accoudoir encastrable selon la revendication 5, **caractérisée en ce qu'**un accoudoir (1), qui peut être rabattu vers le haut en position d'utilisation blocable automatiquement peut être sollicité dans cette position par un utilisateur et il. se produit un déverrouillage par un dispositif mécanique lors du levage de l'accoudoir à l'encontre du sens de sollicitation et/ou d'un levier de basculement et/ou d'une touche de commande.

7. Configuration d'un accoudoir encastrable selon l'une quelconque des revendications 1 à 6, **caractérisée en ce que** l'axe de rabattement (7; 14) est monté sur au moins un support (9) du logement de roue côté carrosserie brute.

8. Configuration d'un accoudoir encastrable selon l'une quelconque des revendications 1 à 7, **caractérisée en ce qu'**un logement de roue et une jambe de force de ressort raccordée ainsi qu'un habillage de logement de roue (4) forment avec l'accoudoir (1) un module de montage pré-monté.

9. Configuration d'un accoudoir encastrable selon l'une quelconque des revendications 1 à 8, **caractérisée en ce que** le contour de la surface de l'habillage de logement de roue (4; 12) avec l'accoudoir encastré (1; 13) est adapté au volume du logement de roue.

10. Configuration d'un accoudoir encastrable selon l'une quelconque des revendications 1 à 9, **caractérisée en ce que**, dans le corps (13) de l'accoudoir, est contenu au moins un compartiment récepteur (16) pour objets (17) qui peut être revêtu d'un couvercle verrouillable (15).

11. Configuration d'un accoudoir encastrable selon l'une quelconque des revendications 1 à 10, **caractérisée en ce que** le dossier (2) est divisé en dossier à 1/3 et en dossier à 2/3, le dossier à 1/3 étant monté fixe et le dossier à 2/3 étant rabattable, tandis que le dossier à 1/3 est éventuellement le support d'un accoudoir.
